# EUROPÄISCHE PATENTSCHRIFT

(11) **EP 1 884 886 B1**
(45) Veröffentlichungstag und Bekanntmachung des Hinweises auf die Patenterteilung: **08.06.2016**
(21) Anmeldenummer: 07112872.2
(22) Anmeldetag: 20.07.2007
(51) Int. Cl.: G06K 15/10, G07B 17/00

(54) **Verfahren und Anordnung zum Erzeugen eines Abdrucks**
Method and assembly for creating a print
Procédé et agencement destinés à la production d'une impression

(30) Priorität: 26.07.2006 DE 102006035254
(43) Veröffentlichungstag der Anmeldung: 06.02.2008
(73) Patentinhaber: Francotyp-Postalia GmbH, 13089 Berlin (DE)
(72) Erfinder: Turner, Olaf, 13465, Berlin (DE); Hübler, Uwe, 15366, Neuenhagen (DE); Hertlein, Dr. Jens, 15745, Wildau (DE); Kieser, Axel, 14165, Berlin (DE)
(74) Vertreter: Cohausz & Florack

(56) Entgegenhaltungen:
- EP-A- 0 687 565
- EP-A- 0 864 429
- US-A- 5 563 985
- US-B1- 6 407 825

## Beschreibung

Die vorliegende Erfindung betrifft ein Verfahren zum Erzeugen eines Abdrucks mit einer nach einem Punktmatrixprinzip, insbesondere einem Tintenstrahlprinzip, arbeitenden Druckeinrichtung, bei dem für den Abdruck ein Punktmuster vorgegeben ist und mit der Druckeinrichtung auf einem Substrat dem vorgegebenen Punktmuster entsprechende Bildpunkte erzeugt werden. Sie betrifft weiterhin eine entsprechende Anordnung zum Erzeugen eines derartigen Abdrucks.

Beim Erstellen von Abdrucken nach einem solchen Punktmatrixprinzip, wie es beispielsweise in der Regel in heutigen Frankiermaschinen Anwendung findet, stellt sich häufig das Problem, einen guten Kompromiss zwischen der Abdruckqualität, also beispielsweise der Flächendeckung des Abdrucks und (bei Verwendung von Tinte) dem Verlaufen der Tinte, und dem Verbrauch des Druckmediums (also beispielsweise der Tinte) zu finden.

Um den Tintenverbrauch möglichst gering zu halten, wird in diesem Zusammenhang in der EP 0 720 919 A1 beispielsweise vorgeschlagen, einzelne Bildpunkte, die entsprechend dem vorgegebenen Punktmuster eigentlich gedruckt werden müssten, nicht zu drucken, um eine so genannte Ausdünnung des Abdrucks zu erzielen. Die Ausdünnung wird dabei erzielt, indem in einem gemäß dem vorgegebenen Punktmuster eigentlich vollflächig zu bedruckenden Bereich eine Art Schachbrettmuster erzeugt wird, indem in einer Reihe bzw. Spalte jeder erste Bildpunkt gedruckt wird, während jeder zweite Bildpunkt weggelassen, also nicht gedruckt wird. Dies hat den Nachteil, dass ein gegebenenfalls sichtbares und damit störendes regelmäßiges Muster im Abdruck erzielt wird.

Um unregelmäßige Kanten zu vermeiden, ist weiterhin gemäß der EP 0 720 919 A1 weiterhin ein Randschärfungsalgorithmus vorgesehen, der sicherstellen soll, dass eine Kontur des Abdruckes definierende Randpunkte stets gedruckt werden, wobei weiterhin verhindert wird, dass in einer Zeile zwei Bildpunkte unmittelbar nebeneinander gedruckt werden. Dies hat allerdings den Nachteil, dass im Bereich der Kontur ein Streifenmuster entsteht.

Weiterhin ist es bekannt, bei der Verwendung von Druckköpfen mit mehreren Düsenreihen, welche eine höhere Auflösung aufweisen als das vorgegebene Punktmuster, die Bildpunkte nur mit jeder zweiten Düsenreihe zu drucken. Um eine höhere Flächendeckung zu erzielen, werden dabei wiederum nach einem vorgegebenen Schema zwischenliegende Bildpunkte gedruckt. Dies hat den Nachteil, dass hierdurch ebenfalls wieder gegebenenfalls störende regelmäßige Muster im Abdruck erzeugt werden.

Diese regelmäßigen Muster können zwar durch die Aufbringung einer deutlich höheren Tintemenge, beispielsweise durch Reduzierung der weggelassenen, d. h. nicht gedruckten Bildpunkte, vermieden werden. Hierbei besteht jedoch das Problem, das dann wieder zu viel Tinte aufgebracht wird, was nicht nur unter wirtschaftlichen Gesichtspunkten unerwünscht ist sondern auch das Problem nach sich zieht, dass der Abdruck verwischen kann. Aus der US 5,563,985 ist ein gattungsgemäßes Verfahren bekannt, bei dem regelmäßige Muster durch die Verwendung eines statistischen Algorithmus mit einer bestimmten Wahrscheinlichkeit für das Drucken der Bildpunkte vermieden werden sollen.

Ein weiterer Nachteil der bekannten Verfahren liegt darin, dass die Flächendeckung bzw. der Grad der Ausdünnung des Abdrucks nur vergleichsweise aufwändig variiert werden kann, indem das entsprechende Ausdünnungsschema ausgetauscht bzw. modifiziert wird.

Der vorliegenden Erfindung liegt daher die Aufgabe zu Grunde, ein Verfahren bzw. eine Anordnung zum Erzeugen eines Abdrucks der eingangs genannten Art zur Verfügung zu stellen, welches bzw. welche die oben genannten Nachteile nicht oder zumindest in geringerem Maße aufweist und insbesondere auf einfache Weise eine Reduzierung der erforderlichen Menge an Druckmedium bei Vermeidung störender regelmäßiger Muster im Abdruck ermöglicht.

Die vorliegende Erfindung löst diese Aufgabe mit einem Verfahren gemäß Anspruch 1. Sie löst diese Aufgabe weiterhin mit einer Anordnung gemäß Anspruch 17.

Der vorliegenden Erfindung liegt die technische Lehre zu Grunde, dass man auf einfache Weise eine Reduzierung der erforderlichen Menge an Druckmedium bei Vermeidung störender regelmäßiger Muster im Abdruck erzielt, wenn zumindest für einen Teil der Punkte eines zu erzeugen Punktmusters die Entscheidung, ob ein Bildpunkt gedruckt wird oder nicht, unter Verwendung einer vorgebbaren Wahrscheinlichkeit für das Drucken des betreffenden Bildpunkts und eines Zufallsgenerators getroffen wird. Über die vorgebbare Wahrscheinlichkeit für das Drucken kann letztlich die Flächendeckung bzw. die
Ausdünnung des erzielten Abdrucks und damit die verbrauchte Menge an Druckmedium (z. B. Tinte, Toner, Farbband etc.) in einfacher Weise eingestellt werden, während der Zufallsgenerator in einfacher Weise sicherstellt, dass sich in dem betreffenden Bereich des Abdrucks keine regelmäßigen, störenden Muster ausbilden.

Gemäß einem Aspekt der Erfindung ist daher ein Verfahren zum Erzeugen eines Abdrucks mit einer nach einem Punktmatrixprinzip, insbesondere einem Tintenstrahlprinzip, arbeitenden Druckeinrichtung vorgesehen, bei dem für den Abdruck ein Punktmuster vorgegeben ist, das einen ersten Bereich und einen von dem ersten Bereich verschiedenen zweiten Bereich aufweist, und mit der Druckeinrichtung auf einem Substrat dem vorgegebenen Punktmuster entsprechende Bildpunkte erzeugt werden. Für wenigstens einen ersten Bildpunkt wird eine erste Wahrscheinlichkeit vorgegeben, mit welcher der erste Bildpunkt erzeugt wird. In einem ersten Entscheidungsschritt wird dann unter Verwendung eines ersten Zufallsgenerators und der ersten Wahrscheinlichkeit ermittelt, ob der erste Bildpunkt erzeugt wird. Schließlich wird der erste Bildpunkt in Abhängigkeit von dem Ergebnis des ersten Entscheidungsschrittes in einem nachfolgenden Druckschritt erzeugt. Dabei wird für die erste Wahrscheinlichkeit in Abhängigkeit von der Lage des ersten Bildpunktes in dem ersten Bereich oder dem zweiten Bereich des Punktmusters ein unterschiedlicher Wert vorgegeben.

Die Wahrscheinlichkeit, mit der ein bestimmter Bildpunkt erzeugt wird, kann zentral bzw. einmalig für alle Bildpunkte eines bestimmten Bereichs des Abdrucks vorgegeben werden. Bei bestimmten Varianten des erfindungsgemäßen Verfahrens kann jedoch auch vorgesehen sein, dass für einen zweiten Bildpunkt eine zweite Wahrscheinlichkeit vorgegeben wird, mit welcher der zweite Bildpunkt erzeugt wird. In einem zweiten Entscheidungsschritt wird dann unter Verwendung eines zweiten Zufallsgenerators und der zweiten Wahrscheinlichkeit ermittelt, ob der zweite Bildpunkt erzeugt wird. Schließlich wird der zweite Bildpunkt in Abhängigkeit von dem Ergebnis des zweiten Entscheidungsschrittes in einem nachfolgenden Druckschritt erzeugt. Hierdurch ist es in einfacher und vorteilhafter Weise möglich, eine Unterscheidung nach den jeweiligen Bildpunkten vorzunehmen.

Die vorliegende Erfindung lässt sich besonders vorteilhaft einsetzen, wenn die Auflösung der Druckeinrichtung größer ist als die Auflösung des vorgegebenen Punktmusters, sodass wenigstens einem Punkt des Punktmusters mehrere Bildpunkte zugeordnet sind, wie dies häufig bei Frankiermaschinen der Fall ist. In diesem Fall wirkt sich die vorliegende Erfindung besonders vorteilhaft aus, weil hier in der Regel eine entsprechende Ausdünnung erforderlich ist, um Druckmedium zu sparen. Mit der Erfindung können dabei, wie oben beschrieben, zum einen eine einfache Regulierung des Grads der Ausdünnung und zum anderen eine zuverlässige Vermeidung von sich regelmäßigen Mustern erzielt werden. Bei weiteren vorteilhaften Varianten des erfindungsgemäßen Verfahrens ist daher vorgesehen, dass das Punktmuster eine vorgegebene erste Auflösung aufweist und die Druckeinrichtung eine maximale zweite Auflösung aufweist, die größer ist als die erste Auflösung. Wenigstens einem ersten Punkt des Punktmusters ist dann wenigstens der erste Bildpunkt und der zweite Bildpunkt zugeordnet. Vorzugsweise beträgt die zweite Auflösung das m-fache der ersten Auflösung, wobei m eine ganze Zahl ist, und zumindest dem ersten Punkt m Bildpunkte zugeordnet sind.

Wie erwähnt können die erste Wahrscheinlichkeit und die zweite Wahrscheinlichkeit unabhängig voneinander vorgegeben werden und auch unterschiedliche Werte aufweisen. Hiermit ist eine besonders feine Abstimmung des Ausdrucks möglich. Bei besonders einfach zu realisierenden Varianten des erfindungsgemäßen Verfahrens ist jedoch vorgesehen, dass die zweite Wahrscheinlichkeit gleich der ersten Wahrscheinlichkeit gesetzt wird. Hierzu kann ein separater Zwischenschritt vorgesehen sein, über den die zweite Wahrscheinlichkeit in Abhängigkeit von der Vorgabe für die erste Wahrscheinlichkeit gesetzt wird. Ebenso ist es, wie oben erwähnt, aber natürlich möglich, für alle Bildpunkte eines bestimmten Bereichs nur eine einzige Wahrscheinlichkeit vorzugeben.

Für die ersten und zweiten Bildpunkte können unterschiedliche Zufallsgeneratoren verwendet werden. Bei weiteren bevorzugten, weil besonders einfach zu realisierenden Varianten des erfindungsgemäßen Verfahrens ist jedoch vorgesehen, dass der erste Zufallsgenerator und der zweite Zufallsgenerator identisch sind.

Die betreffende Wahrscheinlichkeit kann nach einem beliebigen Schema vorgegeben werden. Bei dem erfindungsgemäßen Verfahren ist vorgesehen, dass die erste Wahrscheinlichkeit und/oder die zweite Wahrscheinlichkeit in Abhängigkeit von der Lage des ersten Punktes in dem Punktmuster vorgegeben wird. Hierdurch ist es möglich, für unterschiedliche Bereiche des Abdrucks über die jeweilige Wahrscheinlichkeit eine unterschiedliche Flächendeckung bzw. Ausdünnung vorzugeben.

Diese ortsabhängige Vorgabe der jeweiligen Wahrscheinlichkeit kann grundsätzlich nach beliebigen Kriterien erfolgen. So kann beispielsweise vorgesehen sein, dass in bestimmten Bereichen des Abdrucks, beispielsweise für eine spätere maschinelle Erkennung des Abdrucks, eine besonders hohe Druckqualität erzielt werden muss, während in anderen Bereichen des Abdrucks eine geringere Druckqualität akzeptabel ist.

Besonders vorteilhaft lässt sich die Erfindung einsetzen, wenn das Punktmuster unterschiedliche Bereiche mit unterschiedlichen Druckbildarten aufweist und die erste Wahrscheinlichkeit und/oder die zweite Wahrscheinlichkeit in Abhängigkeit von der Druckbildart des Punktmusters am Ort des ersten Punktes vorgegeben wird. So kann beispielsweise bei einem Frankierabdruck, der einen Bereich mit einem eindimensionalen Barcode und/oder einen Bereich mit einem zweidimensionalen Barcode sowie einen Bereich mit Text und/oder freier Grafik umfasst, vorgesehen sein, dass für die unterschiedlichen Bereiche jeweils unterschiedliche erste Wahrscheinlichkeiten und gegebenenfalls zweite Wahrscheinlichkeit festgelegt werden.

Die jeweilige Wahrscheinlichkeit, mit der ein bestimmter Bildpunkt gedruckt wird, kann auf beliebige geeignete Weise vorgegeben werden. So kann beispielsweise ein bestimmter Zahlenwert vorgegeben werden, welcher der Wahrscheinlichkeit entspricht. Bei besonders bevorzugten Varianten des erfindungsgemäßen Verfahrens ist vorgesehen, dass der erste Zufallsgenerator in einem vorgegebenen ersten Zahlenbereich erste Zufallszahlen erzeugt und die erste Wahrscheinlichkeit durch Unterteilung des ersten Zahlenbereichs in einen ersten Teilbereich und wenigstens einen zweiten Teilbereich vorgegeben wird. Für den jeweiligen Bildpunkt wird dann mit dem ersten Zufallsgenerator eine erste Zufallszahl erzeugt. In dem ersten Entscheidungsschritt wird schließlich festgelegt, dass der jeweilige Bildpunkt in dem Druckschritt erzeugt wird, wenn die erste Zufallszahl in dem ersten Teilbereich des ersten Zahlenbereichs liegt, und der jeweilige Bildpunkt in dem Druckschritt nicht erzeugt wird, wenn die erste Zufallszahl in dem zweiten Teilbereich des ersten Zahlenbereichs liegt.

So kann beispielsweise vorgesehen sein, dass der Zufallsgenerator ganzzahlige Zufallszahlen im Bereich von 1 bis 100 liefert und für die Festlegung einer Wahrscheinlichkeit von x% der erste Teilbereich die Zahlen von 1 bis x umfasst, während der zweite Teilbereich die Zahlen von x+1 bis 100 umfasst.

Es versteht sich jedoch, dass auch eine beliebige andere Festlegung erfolgen kann, bei welchen ersten Zufallszahlen der jeweilige Bildpunkt gedruckt wird oder nicht. Insbesondere kann eine nicht zusammenhängende Unterteilung des ersten Zahlenbereichs erfolgen. So kann beispielsweise bei einer Wahrscheinlichkeit von 50% und ganzzahligen Zufallszahlen vorgesehen sein, dass der betreffende Bildpunkt bei einer geraden Zufallszahl gedruckt werden soll, während er bei einer ungeraden Zufallszahl nicht gedruckt werden soll.

Die Verwendung der betreffenden Wahrscheinlichkeit und des betreffenden Zufallsgenerators kann bei der Abarbeitung des Abdrucks sequenziell erfolgen, sodass mit anderen Worten für jeden Bildpunkt anhand eines von dem Zufallsgenerator gelieferten Wertes entschieden wird, ob ein Bildpunkt gedruckt wird oder nicht. Bei anderen Varianten des erfindungsgemäßen Verfahrens ist vorgesehen, dass diese Festlegung vorab zumindest einen Teil der Bildpunkte getroffen wird und diese Festlegung dann zu einem späteren Zeitpunkt im Rahmen der Entscheidung nur noch für den jeweiligen zu erzeugenden Bildpunkt abgefragt wird. Dies kann auf beliebige geeignete Weise erfolgen.

Bevorzugt ist vorgesehen, dass zumindest für einen den ersten Punkt umfassenden Teilbereich des Punktmusters vorab eine Entscheidungsmatrix generiert wird, wobei die Entscheidungsmatrix unter Verwendung der ersten Wahrscheinlichkeit und des ersten Zufallsgenerators generiert wird und die Entscheidungsmatrix für jeden einem Punkt des Punktmusters zugeordneten Bildpunkt festlegt, ob er in dem Druckschritt erzeugt wird. Die so generierte Entscheidungsmatrix wird dann in dem Entscheidungsschritt verwendet.

Die Verwendung der Entscheidungsmatrix kann dann auf beliebige geeignete Weise erfolgen. Bevorzugt wird zumindest für den den ersten Punkt umfassenden Teilbereich des Punktmusters eine Punktmustermatrix generiert, wobei jedem zu druckenden Punkt des Punktmusters eine vorgegebene Anzahl von zu druckenden Bildpunkten zugeordnet wird. In dem jeweiligen Entscheidungsschritt wird dann eine Druckmatrix durch eine punktweise Verknüpfung der Punktmustermatrix mit der Entscheidungsmatrix generiert. Schließlich wird in dem Druckschritt die Abbildung unter Verwendung der Druckmatrix erzeugt. Die Verknüpfung der Entscheidungsmatrix und der Punktmustermatrix kann auf beliebige geeignete Weise erfolgen. Im einfachsten Fall die Entscheidungsmatrix und/oder die Punktmustermatrix eine binäre Matrix (z. B. mit den Werten "0" und "1 ") und die Verknüpfung eine einfache logische "UND"-Verknüpfung. Es versteht sich jedoch, dass auch beliebige weitere Verknüpfungen erfolgen können, über die zusätzliche Entscheidungskriterien berücksichtigt werden können.

Die Entscheidungsmatrix kann einmalig erzeugt werden und dann unverändert bestehen bleiben. Bevorzugt ist jedoch vorgesehen, dass die Entscheidungsmatrix in vorgebbaren Intervallen neu generiert wird. Bei diesen Intervallen kann es sich um beliebige zeitabhängige oder nutzungsabhängige Intervalle handeln. So kann beispielsweise als nutzungsabhängiges Intervall vorgesehen sein, dass die Entscheidungsmatrix nach jedem n-ten Abdruck neu generiert wird, wobei n = 1 gilt.

Bei bevorzugten Varianten des erfindungsgemäßen Verfahrens ist wiederum ein Randschärfungsalgorithmus vorgesehen. Bevorzugt wird daher die erste Wahrscheinlichkeit und/oder die zweite Wahrscheinlichkeit in Abhängigkeit davon vorgegeben, ob der erste Punkt ein eine Kontur des Abdrucks definierender Randpunkt des Abdrucks ist. Vorzugsweise wird die erste Wahrscheinlichkeit und/oder die zweite Wahrscheinlichkeit dann auf wenigstens 80%, vorzugsweise wenigstens 90%, weiter vorzugsweise 100%, gesetzt, wenn der erste Punkt ein eine Kontur des Abdrucks definierender Randpunkt ist.

Für den jeweiligen Zufallsgenerator können grundsätzlich beliebige geeignete Verfahren (unter Verwendung entsprechender Zufallsalgorithmen) bzw. Einrichtungen verwendet werden, welche Werte mit einer ausreichend zufälligen Verteilung generieren. Wegen der besonders einfachen Implementierung ist bevorzugt wenigstens einer der Zufallsgeneratoren ein Pseudo-Zufallsgenerator, der insbesondere Pseudo-Zufallszahlen generiert.

Die vorliegende Erfindung lässt sich für beliebige Abdrücke einsetzen. Besonders vorteilhaft lässt sie sich in Verbindung mit einer Frankiermaschine anwenden. Der Abdruck ist daher vorzugsweise ein Frankierabdruck.

Die vorliegende Erfindung betrifft weiterhin eine Anordnung zum Erzeugen eines Abdrucks mit einer nach einem Punktmatrixprinzip, insbesondere einem Tintenstrahlprinzip, arbeitenden Druckeinrichtung, die durch eine Steuereinrichtung gesteuert ist, wobei der Steuereinrichtung für den Abdruck ein Punktmuster vorgegeben ist, das einen ersten Bereich und einen von dem ersten Bereich verschiedenen zweiten Bereich aufweist, und die Druckeinrichtung dazu ausgebildet ist, gesteuert durch die Steuereinrichtung auf einem Substrat dem vorgegebenen Punktmuster entsprechende Bildpunkte zu erzeugen. Erfindungsgemäß ist die Steuereinrichtung dazu ausgebildet, für den ersten Bildpunkt eine erste Wahrscheinlichkeit vorzugeben, mit welcher der erste Bildpunkt erzeugt wird, in einem ersten Entscheidungsschritt unter Verwendung eines ersten Zufallsalgorithmus und der ersten Wahrscheinlichkeit zu ermitteln, ob der erste Bildpunkt erzeugt wird, und die Druckereinrichtung derart anzusteuern, dass der erste Bildpunkt in Abhängigkeit von dem Ergebnis des ersten Entscheidungsschrittes erzeugt wird. Die Steuereinrichtung ist zur Vorgabe unterschiedlicher Werte der ersten Wahrscheinlichkeit in Abhängigkeit von der Lage des ersten Bildpunktes in dem ersten Bereich oder dem zweiten Bereich des Punktmusters ausgebildet. Weiterhin betrifft sie eine Frankiermaschine mit einer solchen erfindungsgemäßen Anordnung

Mit dieser erfindungsgemäßen Anordnung bzw. der erfindungsgemäßen Frankiermaschine lassen sich die oben beschriebenen Varianten und Vorteile in demselben Maße realisieren, sodass hier zur Vermeidung von Wiederholungen lediglich auf die obigen Ausführungen verwiesen werden soll.

Weitere bevorzugte Ausgestaltungen der Erfindung ergeben sich aus den Unteransprüchen bzw. der nachstehenden Beschreibung eines bevorzugten Ausführungsbeispiels, welche auf die beigefügten Zeichnungen Bezug nimmt. Es zeigt
- Figur 1: eine schematische Darstellung einer bevorzugten Ausführungsform der erfindungsgemäßen Frankiermaschine mit einer erfindungsgemäßen Anordnung zum Erzeugen eines Abdrucks, mit welcher eine bevorzugte Variante des erfindungsgemäßen Verfahrens zum Erzeugen eines Abdrucks durchgeführt werden kann;
- Figur 2: ein Ablaufdiagramm einer bevorzugten Variante des erfindungsgemäßen Verfahrens zum Erzeugen eines Abdrucks, welche mit der Anordnung aus Figur 1 durchgeführt werden kann.

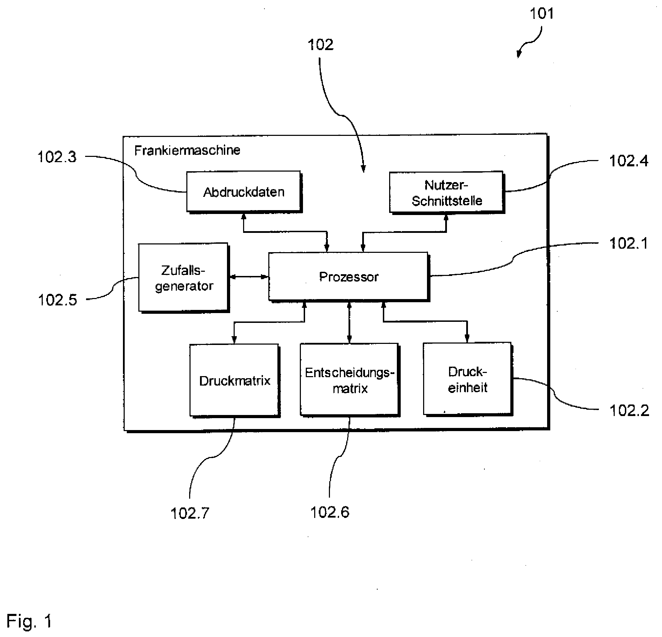

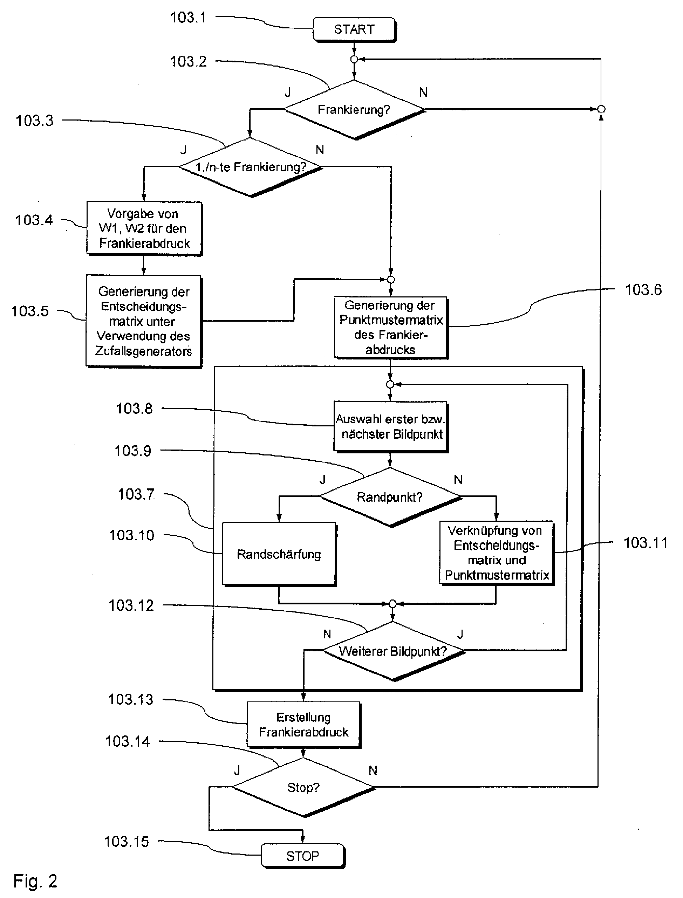

Im Folgenden wird unter Bezugnahme auf die Figuren 1 und 2 eine bevorzugte Ausführungsform der erfindungsgemäßen Frankiermaschine 101 zum Erzeugen eines Frankierabdrucks beschrieben, mit welcher eine bevorzugte Variante des erfindungsgemäßen Verfahrens zum Erzeugen eines Frankierabdrucks durchgeführt wird.

Die Frankiermaschine 101 umfasst zum Erzeugen des Frankierabdrucks eine bevorzugte Ausführungsform der erfindungsgemäßen Anordnung 102 mit einer Steuereinrichtung in Form eines Prozessors 102.1 und einer damit verbundenen Druckeinrichtung 102.2. Die Druckeinrichtung 102.2 umfasst einen Tintenstrahldruckkopf, arbeitet also nach einem hinlänglich bekannten Punktmatrixprinzip, auf dessen Beschreibung hier verzichtet werden soll.

Die Druckeinrichtung 102.2 erzeugt den Frankierabdruck gesteuert durch den Prozessor 102.1 aus einer Vielzahl von Bildpunkten, welche sie auf einem entsprechenden Substrat, beispielsweise einem Brief, über einzelne Tintentröpfchen erzeugt.

Zur Erzeugung des Frankierabdrucks greift der Prozessor 102.1 in hinlänglich bekannter Weise unter anderem auf Abdruckdaten zu, die in einem Abdruckdatenspeicher 102.3 abgelegt sind und die grundsätzliche Gestaltung und Unterteilung des Frankierabdrucks definieren. Im vorliegenden Beispiel umfasst der Frankierabdruck in seiner umfassendsten Form drei unterschiedliche Bereiche mit unterschiedlichen Druckbildarten, nämlich einen zweidimensionalen Barcode, einen eindimensionalen Barcode und einen Klischeeteil mit alphanumerischen Zeichen und/oder freier Grafik.

Weiterhin verarbeitet der Prozessor 102.1 variable Daten für den Frankierabdruck, welche entweder über eine Benutzerschnittstelle 102.4 durch den Benutzer der Frankiermaschine 101 oder über - in der Figur 1 nicht dargestellte - Peripherieeinrichtungen, wie beispielsweise eine Waage, eingegeben werden. Aus allen diesen Daten kann der Prozessor 102.1 ein Punktmuster ermitteln, welches den Frankierabdruck repräsentiert.

Das Punktmuster weist im vorliegenden Beispiel eine erste Auflösung von 300x300 dpi auf, während der Druckkopf der Druckeinrichtung 102.2 eine zweite Auflösung von 300x600 dpi aufweist. Wegen der in einer Richtung doppelten Auflösung der Druckeinrichtung 102.2 sind jedem Punkt des Punktmusters zwei Bildpunkte, nämlich ein erster Bildpunkt und ein zweiter Bildpunkt zugeordnet. Es versteht sich jedoch, dass sich die vorliegende Erfindung bei anderen Varianten auch auf andere Verhältnisse der ersten und zweiten Auflösung, insbesondere auch auf identische erste und zweite Auflösungen, anwenden lässt.

In einem Schritt 103.1 wird zunächst der Verfahrensablauf des erfindungsgemäßen Verfahrens gestartet. In einem Schritt 103.2 wird dann überprüft, ob eine Frankierung erfolgen soll, also ein Frankierabdruck generiert werden soll. Die Generierung des Frankierabdrucks wird dabei in der Regel durch den Benutzer der Frankiermaschine 101 durch eine entsprechende Eingabe über eine Benutzerschnittstelle 102.3 der Anordnung 102 ausgelöst.

Ist dies der Fall, wird in einem Schritt 105.3 überprüft, ob es sich bei der vorliegenden Frankierung nach einer entsprechenden Zählung des Prozessors 102.1 um die erste oder eine n-te Frankierung handelt. Die Anzahl n kann durch den Hersteller der Frankiermaschine und/oder den Benutzer der Frankiermaschine mit n = 1 beliebig vorgegeben sein. Gegebenenfalls kann der Wert für n auch - unter Umständen in Abhängigkeit von beliebig vorgebbaren Kriterien - durch den Hersteller der Frankiermaschine und/oder den Benutzer der Frankiermaschine modifiziert werden.

Handelt es sich bei der Frankierung um die erste oder eine n-te Frankierung, so wird in einem Schritt 103.3 für die ersten Bildpunkte des Frankierabdrucks eine erste Wahrscheinlichkeit W1 und für die zweiten Bildpunkte des Frankierabdrucks eine zweite Wahrscheinlichkeit W2 vorgegeben. Die jeweilige Wahrscheinlichkeit W1 bzw. W2 definiert dabei, mit welcher Wahrscheinlichkeit der jeweilige Bildpunkt tatsächlich erzeugt, d. h. gedruckt werden soll.

Im vorliegenden Beispiel entspricht die erste Wahrscheinlichkeit W1 der zweiten Wahrscheinlichkeit W2. Es versteht sich jedoch, was anderen Varianten der Erfindung auch vorgesehen sein kann, dass die beiden Wahrscheinlichkeiten W1, W2 unterschiedliche Werte aufweisen.

Die Vorgabe der jeweiligen Wahrscheinlichkeit W1, W2 kann durch einen entsprechenden, bei der Herstellung der Frankiermaschine 101 festgelegten Algorithmus erfolgen. Hierbei kann insbesondere auch vorgesehen sein, dass bestimmte Eingaben des Benutzers der Frankiermaschine über die Benutzerschnittstelle 102.4 erforderlich sind beziehungsweise berücksichtigt werden. Hierbei kann insbesondere auch ein Optimierungsalgorithmus implementiert sein, welcher unter Verwendung von automatisch oder über den Benutzer erfassten Eigenschaften eines vorherigen Frankierabdrucks die Wahrscheinlichkeiten W1, W2 modifiziert, um die Druckqualität zu optimieren.

Die Vorgabe der Wahrscheinlichkeiten W1, W2 erfolgt im vorliegenden Beispiel einheitlich für den gesamten Frankierabdruck durch Vorgabe einer Zahl von 0 bis 100. Es versteht sich jedoch, dass anderen Varianten der Erfindung auch vorgesehen sein kann, dass die Wahrscheinlichkeiten in Abhängigkeit von der Lage des jeweiligen Bildpunkts im Frankierabdruck vorgegeben werden können. Insbesondere ist es möglich, für die Bereiche mit unterschiedlichen Druckbildarten (zweidimensionaler Barcode, eindimensionaler Barcode und Klischeebereich) unterschiedliche Wahrscheinlichkeiten W1, W2 vorzugeben.

In einem nachfolgenden Schritt 103.5 wird dann durch den Prozessor 102.1 eine Entscheidungsmatrix generiert. Diese Entscheidungsmatrix gibt dabei in geeigneter Weise für jeden Bildpunkt des Frankierabdrucks wieder, ob er gedruckt werden soll oder nicht. Im vorliegenden Beispiel ist die Entscheidungsmatrix eine binäre Matrix mit den Werten "0" (nicht drucken) und "1" (drucken), die in einem Entscheidungsmatrixspeicher 102.6 der Frankiermaschine 101 gespeichert wird.

Die Entscheidungsmatrix wird unter Verwendung eines Zufallsgenerators generiert, indem der Prozessor 102.1 für jeden Bildpunkt des Abdrucks auf einen in einem Zufallsgeneratorspeicher 102.5 abgelegten Zufallsalgorithmus zugreift. Der Zufallsalgorithmus ist im vorliegenden Beispiel ein Pseudo-Zufallsalgorithmus, der bei jeder Ausführung jeweils eine ganzzahlige Pseudo-Zufallszahl in einem Zahlenbereich von 1 bis 100. Derartige Pseudo-Zufallsalgorithmen sind hinlänglich bekannt, sodass auf eine eingehende Beschreibung verzichtet wird. Ebenso versteht es sich, dass bei anderen Varianten der Erfindung auch beliebige andere echte oder Pseudo-Zufallsgeneratoren verwendet werden können.

Die zuvor für den jeweiligen Bildpunkt vorgegebene Wahrscheinlichkeit W1=W2=x unterteilt den Zahlenbereich des Zufallsalgorithmus in einem ersten Teilbereich von 0 bis x und einen zweiten Teilbereich von x+1 bis 100. Liegt die von dem Zufallsalgorithmus generierte Zufallszahl in dem ersten Teilbereich, so soll der betreffende Bildpunkt gedruckt werden und es wird der entsprechende Punkt der Entscheidungsmatrix auf "1" gesetzt. Liegt die von dem Zufallsalgorithmus generierte Zufallszahl in dem zweiten Teilbereich, so soll der betreffende Bildpunkt nicht gedruckt werden und es wird der entsprechende Punkt der Entscheidungsmatrix auf "0" gesetzt.

Es versteht sich hierbei, dass bei anderen Varianten der Erfindung auch vorgesehen sein kann, dass nur ein Teil der Entscheidungsmatrix auf die soeben beschriebene Weise erzeugt wird und die Entscheidungsmatrix dann durch mehrfache Wiederholung dieses Teils der Entscheidungsmatrix zusammengesetzt wird.

Anschließend wird durch den Prozessor 102.1 in einem Schritt 103.6 eine Punktmustermatrix für den aktuell zu erzeugenden Frankierabdruck generiert. Diese Punktmustermatrix wird unter Verwendung des Punktmusters für den aktuellen Frankierabdrucks generiert und umfasst sämtliche Bildpunkte des Frankierabdrucks. Sie ist wiederum eine binäre Matrix, wobei der Wert "0" definiert, dass der entsprechende Bildpunkt entsprechend dem Punktmuster grundsätzlich nicht zu drucken ist, während der Wert "1" definiert, dass der entsprechende Bildpunkt entsprechend dem Punktmuster grundsätzlich zu drucken wäre.

Es versteht sich hierbei, dass die Generierung der Punktmustermatrix unabhängig von der Generierung der Entscheidungsmatrix ist und daher bei anderen Varianten der Erfindung auch zu einem beliebigen anderen Zeitpunkt vor der Generierung der Entscheidungsmatrix erfolgen kann.

In einem Schritt 103.7 wird dann unter Verwendung der Punktmustermatrix und der Entscheidungsmatrix eine binäre Druckmatrix generiert, welche für alle Bildpunkte festlegt, ob der betreffende Bildpunkt tatsächlich gedruckt werden soll (Wert "1 ") oder nicht (Wert "0"). Hierzu wird zunächst in einem Schritt 103.8 der in der Reihenfolge der Bildpunkte erste bzw. bei nachfolgenden Bildpunkten nächste zu behandelnde Bildpunkt ausgewählt. Die Druckmatrix wird dabei in einem Druckmatrixspeicher 102.7 der Frankiermaschine 101 abgelegt.

In einem Schritt 103.9 wird dann überprüft, ob es sich bei diesem Bildpunkt um einen eine Kontur des Frankierabdrucks definierenden Randpunkt handelt. Ist dies der Fall, wird in einem Entscheidungsschritt 103.11 durch den Prozessor 102.1 ein Randschärfungsalgorithmus ausgeführt. Hierbei kann für einen solchen Randpunkt - ähnlich zu den oben beschriebenen Wahrscheinlichkeiten W1, W2 - wiederum eine Wahrscheinlichkeit WR vorgegeben sein, welche definiert, mit welcher Wahrscheinlichkeit ein solcher Randpunkt gedruckt werden soll. Unter Verwendung des Zufallsalgorithmus kann der Prozessor 102.1 dann wiederum bestimmen, ob der betreffende Randpunkt tatsächlich gedruckt werden soll (Wert "1 ") oder nicht (Wert "0"), und schreibt den entsprechenden Wert in die Druckmatrix.

Je nach Gestaltung des Randschärfungsalgorithmus können dabei unterschiedliche Wahrscheinlichkeiten WR vorgegeben sein. Bevorzugt liegen diese Wahrscheinlichkeiten WR aber oberhalb von 80% bis hin zu 100%.

Handelt es sich bei dem aktuellen Bildpunkt nicht um einen Randpunkt, so wird in einem Entscheidungsschritt 103.11 der Wert für die Matrix durch eine einfache "UND"-Verknüpfung des diesem Bildpunkt zugehörigen Werts der Entscheidungsmatrix und des diesem Bildpunkt zugehörigen Werts der Punktmustermatrix bestimmt. Es versteht sich jedoch, dass bei anderen Varianten der Erfindung auch eine beliebige andere Verknüpfung der Entscheidungsmatrix und der Punktmustermatrix erfolgen kann, wobei insbesondere auch weitere Entscheidungskriterien Einfluss finden können.

In einem Schritt 103.12 wird dann überprüft, ob für einen weiteren Bildpunkt des Abdrucks der Wert der Druckmatrix zu bestimmen ist. Ist dies der Fall, wird zum Schritt 103.8 zurück gesprungen.

Andernfalls erfolgt in einem Schritt 103.13 die Erstellung des Frankierabdrucks durch die Druckeinrichtung 102.2, wobei die Druckeinrichtung 102.2 durch den Prozessor 102.1 unter Verwendung der in dem Druckmatrixspeicher 102.7 abgelegten Druckmatrix erfolgt.

Über die vorgebbare Wahrscheinlichkeit W1, W2 für das Drucken der einzelnen Bildpunkte kann letztlich die Flächendeckung bzw. die Ausdünnung des Frankierabdrucks und damit die verbrauchte Menge an Tinte in einfacher Weise eingestellt werden, während der Zufallsgenerator in einfacher Weise sicherstellt, dass sich in dem betreffenden Bereich des Frankierabdrucks keine regelmäßigen, störenden Muster ausbilden. Mit der vorliegenden Erfindung ist mit anderen Worten zum einen eine einfache Regulierung des Grads der Ausdünnung und zum anderen eine zuverlässige Vermeidung von störenden, regelmäßigen Mustern möglich.

Die neu erfolgende Generierung der Entscheidungsmatrix nach jeder n-ten Frankierung stellt weiterhin sicher, dass nicht über einen längeren Zeitraum eine zufällig ungünstige Entscheidungsmatrix verwendet wird, sodass auf lange Sicht gesehen eine vorteilhafte Flächendeckung bzw. Ausdünnung des Frankierabdrucks sichergestellt ist.

In einem Schritt 103.14 wird schließlich überprüft, ob der Verfahrensablauf beendet werden soll. Ist dies der Fall wird der Verfahrensablauf in einem Schritt 103.15 beendet. Andernfalls wird zum Schritt 103.2 zurück gesprungen.

Es versteht sich, dass eine Reihe von Modifikationen des soeben beschriebenen Verfahrensablaufs möglich ist. Insbesondere kann bei anderen Varianten der Erfindung auf eine vorab erfolgende Ermittlung der Entscheidungsmatrix (Schritt 103.5) verzichtet werden. Vielmehr kann in dem Schritt 103.11 auch vorgesehen sein, dass der Wert der Druckmatrix für den betreffenden Bildpunkt unmittelbar unter Verwendung der im Bildpunkt zugeordneten Wahrscheinlichkeit und des Zufallsgenerators ermittelt wird.

Es sei an dieser Stelle erwähnt, dass die vorstehend beschriebenen Speicher der Frankiermaschine 101 alle oder zum Teil sowohl als separate Speichermodule als auch lediglich als einzelne Speicherbereiche eines einzigen Speichermoduls ausgebildet sein können.

Die vorliegende Erfindung wurde vorstehend ausschließlich an Hand eines Beispiels einer Frankiermaschine beschrieben. Es versteht sich jedoch, dass die Erfindung auch in Zusammenhang mit beliebigen anderen Anwendungen, bei denen ein entsprechender Abdruck generiert werden soll, zum Einsatz kommen kann.

## Patentansprüche

1. Verfahren zum Erzeugen eines Abdrucks mit einer nach einem Punktmatrixprinzip, insbesondere einem Tintenstrahlprinzip, arbeitenden Druckeinrichtung, bei dem
- für den Abdruck ein Punktmuster vorgegeben ist, das einen ersten Bereich und einen von dem ersten Bereich verschiedenen zweiten Bereich aufweist, und
- mit der Druckeinrichtung (102.2) auf einem Substrat dem vorgegebenen Punktmuster entsprechende Bildpunkte erzeugt werden, wobei
- für wenigstens einen ersten Bildpunkt eine erste Wahrscheinlichkeit vorgegeben wird, mit welcher der erste Bildpunkt erzeugt wird,
- in einem ersten Entscheidungsschritt (103.11) unter Verwendung eines ersten Zufallsgenerators und der ersten Wahrscheinlichkeit ermittelt wird, ob der erste Bildpunkt erzeugt wird, und
- der erste Bildpunkt in Abhängigkeit von dem Ergebnis des ersten Entscheidungsschrittes (103.11) in einem nachfolgenden Druckschritt (103.13) erzeugt wird,
**dadurch gekennzeichnet, dass**
- für die erste Wahrscheinlichkeit in Abhängigkeit von der Lage des ersten Bildpunktes in dem ersten Bereich oder dem zweiten Bereich des Punktmusters ein unterschiedlicher Wert vorgegeben wird.

2. Verfahren nach Anspruch 1, **dadurch gekennzeichnet, dass**
- für einen zweiten Bildpunkt eine zweite Wahrscheinlichkeit vorgegeben wird, mit welcher der zweite Bildpunkt erzeugt wird,
- in einem zweiten Entscheidungsschritt (103.11) unter Verwendung eines zweiten Zufallsgenerators und der zweiten Wahrscheinlichkeit ermittelt wird, ob der zweite Bildpunkt erzeugt wird, und
- der zweite Bildpunkt in Abhängigkeit von dem Ergebnis des zweiten Entscheidungsschrittes (103.11) in einem nachfolgenden Druckschritt (103.13) erzeugt wird.

3. Verfahren nach Anspruch 2, **dadurch gekennzeichnet, dass**
- das Punktmuster eine vorgegebene erste Auflösung aufweist und
- die Druckeinrichtung (102.2) eine maximale zweite Auflösung aufweist, die größer ist als die erste Auflösung, und
- wenigstens einem ersten Punkt des Punktmusters wenigstens der erste Bildpunkt und der zweite Bildpunkt zugeordnet ist.

4. Verfahren nach Anspruch 3, **dadurch gekennzeichnet, dass**
- die zweite Auflösung das m-fache der ersten Auflösung beträgt, wobei m eine ganze Zahl ist, und
- zumindest dem ersten Punkt m Bildpunkte zugeordnet sind.

5. Verfahren nach einem der Ansprüche 2 bis 4, **dadurch gekennzeichnet, dass** die zweite Wahrscheinlichkeit gleich der ersten Wahrscheinlichkeit gesetzt wird.

6. Verfahren nach einem der Ansprüche 2 bis 5, **dadurch gekennzeichnet, dass** der erste Zufallsgenerator und der zweite Zufallsgenerator identisch sind.

7. Verfahren nach einem der Ansprüche 2 bis 6, **dadurch gekennzeichnet, dass** die zweite Wahrscheinlichkeit in Abhängigkeit von der Lage des zweiten Bildpunktes in dem ersten Bereich oder dem zweiten Bereich des Punktmusters vorgegeben wird.

8. Verfahren nach einem der vorhergehenden Ansprüche, **dadurch gekennzeichnet, dass**
- das Punktmuster als unterschiedliche erste und zweite Bereiche einen ersten Bereich und einen zweiten Bereich mit unterschiedlichen Druckbildarten aufweist und
- die erste Wahrscheinlichkeit und/oder die zweite Wahrscheinlichkeit in Abhängigkeit von der Druckbildart des Punktmusters am Ort des ersten Punktes vorgegeben wird.

9. Verfahren nach einem der vorhergehenden Ansprüche, **dadurch gekennzeichnet, dass**
- der erste Zufallsgenerator in einem vorgegebenen ersten Zahlenbereich erste Zufallszahlen erzeugt,
- die erste Wahrscheinlichkeit durch Unterteilung des ersten Zahlenbereichs in einen ersten Teilbereich und wenigstens einen zweiten Teilbereich vorgegeben wird,
- für den jeweiligen Bildpunkt mit dem ersten Zufallsgenerator eine erste Zufallszahl erzeugt wird und
- in dem ersten Entscheidungsschritt (103.11) festgelegt wird, dass
- der jeweilige Bildpunkt in dem Druckschritt (103.13) erzeugt wird, wenn die erste Zufallszahl in dem ersten Teilbereich des ersten Zahlenbereichs liegt, und
- der jeweilige Bildpunkt in dem Druckschritt (103.13) nicht erzeugt wird, wenn die erste Zufallszahl in dem zweiten Teilbereich des ersten Zahlenbereichs liegt.

10. Verfahren nach einem der vorhergehenden Ansprüche, **dadurch gekennzeichnet, dass**
- zumindest für einen den ersten Punkt umfassenden Teilbereich des Punktmusters eine Entscheidungsmatrix generiert wird, wobei
- die Entscheidungsmatrix unter Verwendung der ersten Wahrscheinlichkeit und des ersten Zufallsgenerators generiert wird und
- die Entscheidungsmatrix für jeden einem Punkt des Punktmusters zugeordneten Bildpunkt festlegt, ob er in dem Druckschritt (103.13) erzeugt wird, und
- die Entscheidungsmatrix in dem Entscheidungsschritt verwendet wird.

11. Verfahren nach Anspruch 10, **dadurch gekennzeichnet, dass**
- zumindest für den den ersten Punkt umfassenden Teilbereich des Punktmusters eine Punktmustermatrix generiert wird, wobei jedem zu druckenden Punkt des Punktmusters eine vorgegebene Anzahl von zu druckenden Bildpunkten zugeordnet wird,
- in dem jeweiligen Entscheidungsschritt (103.11) eine Druckmatrix durch eine punktweise Verknüpfung der Punktmustermatrix mit der Entscheidungsmatrix generiert wird und
- in dem Druckschritt (103.13) die Abbildung unter Verwendung der Druckmatrix erzeugt wird.

12. Verfahren nach Anspruch 10 oder 11, **dadurch gekennzeichnet, dass** die Entscheidungsmatrix in vorgebbaren Intervallen, insbesondere nach jedem n-ten Abdruck, neu generiert wird.

13. Verfahren nach einem der vorhergehenden Ansprüche, **dadurch gekennzeichnet, dass** die erste Wahrscheinlichkeit und/oder die zweite Wahrscheinlichkeit in Abhängigkeit davon vorgegeben wird, ob der erste Punkt ein eine Kontur des Abdrucks definierender Randpunkt des Abdrucks ist.

14. Verfahren nach Anspruch 13, **dadurch gekennzeichnet, dass** die erste Wahrscheinlichkeit und/oder die zweite Wahrscheinlichkeit auf wenigstens 80%, vorzugsweise wenigstens 90%, weiter vorzugsweise 100%, gesetzt wird, wenn der erste Punkt ein eine Kontur des Abdrucks definierender Randpunkt ist.

15. Verfahren nach einem der vorhergehenden Ansprüche, **dadurch kennzeichnet, dass** wenigstens einer der Zufallsgeneratoren ein Pseudo-Zufallsalgorithmus ist, der insbesondere Pseudo-Zufallszahlen generiert.

16. Verfahren nach einem der vorhergehenden Ansprüche, **dadurch gekennzeichnet, dass** der Abdruck ein Frankierabdruck ist.

17. Anordnung zum Erzeugen eines Abdrucks mit einer nach einem Punktmatrixprinzip, insbesondere einem Tintenstrahlprinzip, arbeitenden Druckeinrichtung (102.2), die durch eine Steuereinrichtung (102.1) gesteuert ist, wobei
- der Steuereinrichtung (102.1) für den Abdruck ein Punktmuster vorgegeben ist, das einen ersten Bereich und einen von dem ersten Bereich verschiedenen zweiten Bereich aufweist,
- die Druckeinrichtung (102.2) dazu ausgebildet ist, gesteuert durch die Steuereinrichtung (102.1) auf einem Substrat dem vorgegebenen Punktmuster entsprechende Bildpunkte zu erzeugen, wobei
- die Steuereinrichtung (102.1) dazu ausgebildet ist,
- für den ersten Bildpunkt eine erste Wahrscheinlichkeit vorzugeben, mit welcher der erste Bildpunkt erzeugt wird,
- in einem ersten Entscheidungsschritt (103.11) unter Verwendung eines ersten Zufallsgenerators und der ersten Wahrscheinlichkeit zu ermitteln, ob der erste Bildpunkt erzeugt wird, und
- die Druckereinrichtung (102.2) derart anzusteuern, dass der erste Bildpunkt in Abhängigkeit von dem Ergebnis des ersten Entscheidungsschrittes (103.11) erzeugt wird,
**dadurch gekennzeichnet, dass**
- die Steuereinrichtung (102.1) zur Vorgabe unterschiedlicher Werte der ersten Wahrscheinlichkeit in Abhängigkeit von der Lage des ersten Bildpunktes in dem ersten Bereich oder dem zweiten Bereich des Punktmusters ausgebildet ist.

18. Anordnung nach Anspruch 17, **dadurch gekennzeichnet, dass** die Steuereinrichtung (102.1) dazu ausgebildet ist,
- für den zweiten Bildpunkt eine zweite Wahrscheinlichkeit vorzugeben, mit welcher der zweite Bildpunkt erzeugt wird,
- in einem zweiten Entscheidungsschritt (103.11) unter Verwendung eines zweiten Zufallsgenerators und der zweiten Wahrscheinlichkeit zu ermitteln, ob der zweite Bildpunkt erzeugt wird, und
- die Druckereinrichtung (102.2) derart anzusteuern, dass der zweite Bildpunkt in Abhängigkeit von dem Ergebnis des zweiten Entscheidungsschrittes (103.11) erzeugt wird.

19. Anordnung nach Anspruch 18, **dadurch gekennzeichnet, dass**
- der Steuereinrichtung (102.1) das Punktmuster mit einer vorgegebenen ersten Auflösung vorgegeben ist,
- die Druckeinrichtung (102.2) eine maximale zweite Auflösung aufweist, die größer ist als die erste Auflösung, wobei
- wenigstens einem ersten Punkt des Punktmusters wenigstens der erste Bildpunkt und der zweite Bildpunkt zugeordnet sind.

20. Anordnung nach Anspruch 19, **dadurch gekennzeichnet, dass**
- die zweite Auflösung das m-fache der ersten Auflösung beträgt, wobei m eine ganze Zahl ist, und
- zumindest dem ersten Punkt m Bildpunkte zugeordnet sind.

21. Anordnung nach einem der Ansprüche 18 bis 20, **dadurch gekennzeichnet, dass** die zweite Wahrscheinlichkeit gleich der ersten Wahrscheinlichkeit ist.

22. Anordnung nach einem der Ansprüche 18 bis 21, **dadurch gekennzeichnet, dass** der erste Zufallsgenerator und der zweite Zufallsgenerator identisch sind.

23. Anordnung nach einem der Ansprüche 18 bis 22, **dadurch gekennzeichnet, dass** die Steuereinrichtung (102.1) zur Vorgabe der zweiten Wahrscheinlichkeit in Abhängigkeit von der Lage des zweiten Bildpunktes in dem ersten Bereich oder dem zweiten Bereich des Punktmusters ausgebildet ist.

24. Anordnung nach einem der Ansprüche 17 bis 23, **dadurch gekennzeichnet, dass**
- das Punktmuster als unterschiedliche erste und zweite Bereiche einen ersten Bereich und einen zweiten Bereich mit unterschiedlichen Druckbildarten aufweist und
- die Steuereinrichtung (102.1) zur Vorgabe der ersten Wahrscheinlichkeit und/oder der zweiten Wahrscheinlichkeit in Abhängigkeit von der Druckbildart des Punktmusters am Ort des ersten Punktes ausgebildet ist.

25. Anordnung nach einem der Ansprüche 17 bis 24, **dadurch gekennzeichnet, dass** die Steuereinrichtung (102.1) dazu ausgebildet ist,
- unter Verwendung des ersten Zufallsgenerators in einem vorgegebenen ersten Zahlenbereich erste Zufallszahlen zu erzeugen,
- die erste Wahrscheinlichkeit durch Unterteilung des ersten Zahlenbereichs in einen ersten Teilbereich und wenigstens einen zweiten Teilbereich vorzugeben,
- für den jeweiligen Bildpunkt unter Verwendung des ersten Zufallsgenerators eine erste Zufallszahl zu erzeugen, und
- in dem ersten Entscheidungsschritt (103.11) festzulegen, dass
- der jeweilige Bildpunkt in dem Druckschritt (103.13) erzeugt wird, wenn die erste Zufallszahl in dem ersten Teilbereich des ersten Zahlenbereichs liegt, und
- der jeweilige Bildpunkt in dem Druckschritt (103.13) nicht erzeugt wird, wenn die erste Zufallszahl in dem zweiten Teilbereich des ersten Zahlenbereichs liegt.

26. Anordnung nach einem der Ansprüche 17 bis 25, **dadurch gekennzeichnet, dass** die Steuereinrichtung (102.1) dazu ausgebildet ist,
- zumindest für einen den ersten Punkt umfassenden Teilbereich des Punktmusters eine Entscheidungsmatrix zu generieren, wobei
- die Entscheidungsmatrix unter Verwendung der ersten Wahrscheinlichkeit und des ersten Zufallsgenerators generiert wird und
- die Entscheidungsmatrix für jeden einem Punkt des Punktmusters zugeordneten Bildpunkt festlegt, ob er in dem Druckschritt erzeugt wird, und
- die Entscheidungsmatrix in dem jeweiligen Entscheidungsschritt (103.11) zu verwenden.

27. Anordnung nach Anspruch 26, **dadurch gekennzeichnet, dass** die Steuereinrichtung (102.1) dazu ausgebildet ist,
- zumindest für den den ersten Punkt umfassenden Teilbereich des Punktmusters eine Punktmustermatrix zu generieren, wobei jedem zu druckenden Punkt des Punktmusters eine vorgegebene Anzahl von zu druckenden Bildpunkten zugeordnet wird,
- in dem jeweiligen Entscheidungsschritt (103.11) eine Druckmatrix durch eine punktweise Verknüpfung der Punktmustermatrix mit der Entscheidungsmatrix zu generieren und
- in dem Druckschritt (103.13) die Abbildung unter Verwendung der Druckmatrix zu erzeugen.

28. Anordnung nach Anspruch 26 oder 27, **dadurch gekennzeichnet, dass** die Steuereinrichtung (102.1) dazu ausgebildet ist, die Entscheidungsmatrix in vorgebbaren Intervallen, insbesondere nach jedem n-ten Abdruck, neu zu generieren.

29. Anordnung nach einem der Ansprüche 17 bis 28, **dadurch gekennzeichnet, dass** die Steuereinrichtung dazu ausgebildet ist, die erste Wahrscheinlichkeit und/oder die zweite Wahrscheinlichkeit in Abhängigkeit davon vorzugeben, ob der erste Punkt ein eine Kontur des Abdrucks definierender Randpunkt des Abdrucks ist.

30. Anordnung nach Anspruch 29, **dadurch gekennzeichnet, dass** die Steuereinrichtung (102.1) dazu ausgebildet ist, die erste Wahrscheinlichkeit und/oder die zweite Wahrscheinlichkeit auf wenigstens 80%, vorzugsweise wenigstens 90%, weiter vorzugsweise 100%, zu setzen, wenn der erste Punkt ein eine Kontur des Abdrucks definierender Randpunkt ist.

31. Frankiermaschine, die eine Anordnung (102) nach einem der Ansprüche 17 bis 30 umfasst.

## Claims

1. A method for generating an imprint using a printing device working according to a dot matrix principle, especially an inkjet principle, wherein
- a dot pattern is set for the imprint, which comprises a first area and a second area which is different from the first area, and
- image points in accordance with the predetermined dot pattern are generated on a substrate with the printing device (102.2), wherein
- for at least one first image point a first probability is set with which the first image point is generated,
- in a first decision step (103.11) under usage of a first random generator and the first probability it is determined, if the first image point is generated, and
- depending on the result of the first decision step (103.11) the first image point is generated in a subsequent printing step (103.13),
**characterized in that**,
- depending on the position of the first image point in the first area or the second area of the dot pattern a different value is set for the first probability.

2. A method as claimed in claim 1, **characterized in that**,
- a second probability for a second image point is set, with which the second image point is generated,
- in a second decision step (103.11) under usage of a second random generator and the second probability it is determined, if the second image point is generated, and
- depending on the result of the second decision step (103.11) the second image point is generated in a subsequent printing step (103.13).

3. A method as claimed in claim 2, **characterized in that**,
- the dot pattern exhibits a predetermined first resolution and
- the printing device (102.2) exhibits a maximum second resolution that is greater than the first resolution, and
- at least one first dot of the dot pattern is associated with at least one first image point and one second image point.

4. A method as claimed in claim 3, **characterized in that**,
- the second resolution is m times the first resolution of said dot pattern, wherein m is a whole number, and
- at least m image points are associated with the first dot.

5. A method as claimed in one of the claims 2 to 4, **characterized in that**, the second probability is set equal to the first probability.

6. A method as claimed in one of the claims 2 to 5, **characterized in that**, the first random generator and the second random generator are identical.

7. A method as claimed in one of the claims 2 to 6, **characterized in that**, the second probability is set depending on the position of the second image point in the first area or the second area of the dot pattern.

8. A method as claimed in one of the previous claims, **characterized in that**,
- the dot pattern exhibits as different first and second areas a first area and a second area with different print image types and
- the first probability and/or the second probability are set depending on the print image type of the dot pattern at the location of the first dot.

9. A method as claimed in one of the previous claims, **characterized in that**,
- the first random generator is generating first random numbers in a predetermined first number range,
- the first probability is set by subdividing the first number range into a first sub-range and at least one second sub-range,
- for each image point a first random number is generated with the first random generator and
- in the first decision step (103.11) it is determined, that
- the respective image point is generated in the printing step (103.13), if the first random number is in the first sub-range of the first number range, and
- the respective image point is not generated in the printing step (103.13), if the first random number is in the second sub-range of the first number range.

10. A method as claimed in one of the previous claims, **characterized in that**,
- for the at least one first dot comprising sub-range of the dot pattern a decision matrix is generated, wherein
- the decision matrix is generated under usage of the first probability and the first random generator and
- the decision matrix determines for each image point which is assigned to a dot of the dot pattern, if it is generated in the printing step (103.13), and
- the decision matrix is used in the decision step.

11. A method as claimed in claim 10, **characterized in that**,
- a dot pattern matrix is generated for at least the first dot comprising sub-range of the dot pattern, wherein each of the dots to be printed of the dot pattern are assigned to a predetermined number of image points to be printed,
- in the respective decision step (103.11) a print matrix is generated by a point-by-point linking of the dot pattern matrix with the decision matrix and
- in the printing step (103.13) the imprint is generated under usage of the printing matrix.

12. A method as claimed in claim 10 or 11, **characterized in that**, the decision matrix is generated anew at predetermined intervals, especially after every nth imprint.

13. A method as claimed in one of the previous claims, **characterized in that**, the first probability and/or the second probability are set depending on whether the first dot is an edge point defining a contour of said imprint.

14. A method as claimed in claim 13, **characterized in that**, the first probability and/or the second probability are set to at least 80%, preferably to at least 90% and more preferably to 100%, if the first dot is an edge point defining a contour of said imprint.

15. A method as claimed in one of the previous claims, **characterized in that**, at least one of the random generators is a pseudo-random algorithm that generates especially pseudo-random numbers.

16. A method as claimed in one of the previous claims, **characterized in that**, the imprint is a franking imprint.

17. An arrangement for generating an imprint using a printing device working according to a dot matrix principle, especially an inkjet principle, which is controlled by a control arrangement (102.1), wherein,
- a dot pattern is set for the control arrangement (102.1) for the imprint, which exhibits a first area and a second area which is different from the first area, and
- the printing device (102.2) is designed to, controlled by the control arrangement (102.1), generate image points in accordance with the predetermined dot pattern on a substrate, wherein
- the control arrangement (102.1) is designed
- to set a first probability for the first image point with which the first image point is generated,
- to determine in a first decision step (103.11) under usage of a first random generator and the first probability, if the first image point is generated, and
- to control the printing device (102.2) in such a way, that the first image point is generated depending on the result of the first decision step (103.11),
**characterized in that**,
- the control arrangement (102.1) is designed to set different values of the first probability depending on the position of the first image point in the first area or the second area of the dot pattern.

18. An arrangement as claimed in claim 17, **characterized in that**, the control arrangement (102.1) is designed
- to set a second probability for the second image point with which the second image point is generated,
- to determine in a second decision step (103.11) under usage of a second random generator and the second probability, if the second image point is generated, and
- to control the printing device (102.02) in such a way, that the second image point is generated depending on the result of the second decision step (103.11).

19. An arrangement as claimed in claim 18, **characterized in that**,
- the dot pattern with a predetermined first resolution is set for the control arrangement (102.1),
- the printing device (102.2) exhibits a maximum second resolution that is greater than the first resolution, wherein
- at least one first dot of the dot pattern is associated with at least one first image point and one second image point.

20. An arrangement as claimed in claim 19, **characterized in that**,
- the second resolution is m times the first resolution, wherein m is a whole number, und
- at least m image points are associated with the first dot.

21. An arrangement as claimed in one of the claims 18 to 20, **characterized in that**, the second probability is equal to the first probability.

22. An arrangement as claimed in one of the claims 18 to 21, **characterized in that**, the first random generator and the second random generator are identical.

23. An arrangement as claimed in one of the claims 18 to 22, **characterized in that**, the control arrangement (102.1) is designed to set the second probability depending on the position of the second image point in the first area or the second area of the dot pattern.

24. An arrangement as claimed in one of the claims 17 to 23, **characterized in that**,
- the dot pattern exhibits as different first and second areas a first area and a second area with different print image types and
- the control arrangement (102.1) is designed to set the first probability and/or the second probability depending on the print image type of the dot pattern at the location of the first dot.

25. An arrangement as claimed in one of the claims 17 to 24, **characterized in that**, the control arrangement (102.1) is designed
- to generate first random numbers in a predetermined first number range under usage of the first random generator,
- to set the first probability by subdividing the first number range into a first sub-range and at least one second sub-range,
- to generate a first random number for the respective image point under usage of the first random generator and
- to determine in the first decision step (103.11), that
- the respective image point is generated in the printing step (103.13), if the first random number is in the first sub-range of the first number range, and
- the respective image point is not generated in the printing step (103.13), if the first random number is in the second sub-range of the first number range.

26. An arrangement as claimed in one of the claims 17 to 25, **characterized in that**, the control arrangement (102.1) is designed
- to generate a decision matrix for the at least one first dot comprising sub-range of the dot pattern, wherein
- the decision matrix is generated under usage of the first probability and the first random generator and
- the decision matrix determines for each image point which is assigned to a dot of the dot pattern, if it is generated in the printing step, and
- to use the decision matrix in the respective decision step (103.11).

27. An arrangement as claimed in claim 26, **characterized in that**, the control arrangement (102.1) is designed
- to generate a dot pattern matrix for at least the first dot comprising sub-range of the dot pattern, wherein each of the dots to be printed of the dot pattern is assigned to a predetermined number of image points to be printed,
- to generate a print matrix in the respective decision step (103.11) by a point-by-point linking of the dot pattern matrix with the decision matrix and
- to generate the imprint under usage of the printing matrix in the printing step (103.13).

28. An arrangement as claimed in claim 26 or claim 27, **characterized in that**, the control arrangement (102.1) is designed to generate the decision matrix anew at predetermined intervals, especially after every nth imprint.

29. An arrangement as claimed in one of the claims 17 to 28, **characterized in that**, the control arrangement is designed to set the first probability and/or the second probability depending on whether the first dot is an edge point defining a contour of the imprint.

30. An arrangement as claimed in claim 29, **characterized in that**, the control arrangement (102.1) is designed to set the first probability and/or the second probability to at least 80%, preferably to at least 90% and more preferably to 100%, if the first dot is an edge point defining a contour of the imprint.

31. Franking machine which comprises an arrangement (102) according to one of the claims 17 to 30.

## Revendications

1. Procédé de produire une impression avec un dispositif d'impression travaillant selon un principe d'une matrice de points, en particulier un principe à jet d'encre, dans lequel
- pour l'impression d'un motif de points est prédéterminé comprenant une première section et une deuxième section différente de la première section, et
- avec le dispositif d'impression (102.2) des points d'image correspondants au motif de points prédéterminé sont générés sur un substrat, dans lequel
- une première probabilité est donnée pour au moins un premier point d'image avec laquelle le premier point d'image est généré,
- dans une première étape de décision (103.11), en utilisant un premier générateur aléatoire et la première probabilité, il est déterminé si le premier point d'image est généré, et
- dans une étape d'impression suivante (103.13) le premier point d'image est généré en fonction du résultat de la première étape de décision (103.11)
**caractérisé en ce que**
- une valeur différente est donnée pour la première probabilité en fonction de la position du premier point d'image dans la première section ou la deuxième section.

2. Procédé selon la revendication 1, **caractérisé en ce que**
- une deuxième probabilité est donnée pour au moins un deuxième point d'image avec laquelle le deuxième point d'image est généré,
- dans une deuxième étape de décision (103.11), en utilisant un deuxième générateur aléatoire et la deuxième probabilité, il est déterminé si le deuxième point d'image est généré, et
- dans une étape d'impression suivante (103.13) le premier point d'image est généré en fonction du résultat de la première étape de décision (103,11).

3. Procédé selon la revendication 2, **caractérisé en ce que**
- le motif de points a une première résolution prédéterminée,
- le dispositif d'impression (102.2) a une seconde résolution maximale qui est supérieure à la première résolution, et
- le premier point d'image et le second point d'image est associé à au moins un premier point du motif de points.

4. Procédé selon la revendication 3, **caractérisé en ce que**
- la seconde résolution est m fois la première résolution, où m est un entier, et
- au moins m points d'image sont associés à au moins le premier point.

5. Procédé selon l'une quelconque des revendications 2 à 4, **caractérisé en ce que** la seconde probabilité est mise égale à la première probabilité.

6. Procédé selon l'une quelconque des revendications 2 à 5, **caractérisé en ce que** le premier générateur aléatoire et le second générateur aléatoire sont identiques.

7. Procédé selon l'une quelconque des revendications précédentes, **caractérisé en ce que** la deuxième probabilité est spécifié en fonction de la position du deuxième point dans la première section ou la deuxième section du motif de points.

8. Procédé selon l'une quelconque des revendications précédentes, **caractérisé en ce que**
- le motif de points comprend, comme différente première section et deuxième section, une première section et une deuxième section avec différents types d'image d'impression, et
- la première probabilité et/ou la deuxième probabilité est donnée en fonction du type d'image d'impression du motif de points à la position du premier point.

9. Procédé selon l'une des revendications précédentes, **caractérisé en ce que**
- le premier générateur aléatoire dans une première plage de nombres prédéterminée généré des nombres premiers aléatoires,
- la première probabilité est déterminée en divisant la première plage de nombres dans une première partie et au moins une seconde partie,
- pour chaque point d'image un premier nombre aléatoire est généré avec le premier générateur aléatoire et
- il est établi dans la première étape de décision (103.11) que
- le point d'image respectif est généré dans l'étape d'impression (103.13), lorsque le premier nombre aléatoire se trouve dans la première partie de la première plage de nombres, et
- le point d'image respectif n'est pas généré dans l'étape d'impression (103.13), lorsque le premier nombre aléatoire se trouve dans la deuxième partie de la première plage de nombres.

10. Procédé selon l'une quelconque des revendications précédentes, **caractérisé en ce que**
- une matrice de décision est générée au moins pour une partie du motif de points comprenant le premier point, dans lequel
- la matrice de décision est générée en utilisant la première probabilité et le premier générateur aléatoire, et
- la matrice de décision détermine pour chacun point d'image associé à un point du motif de points s'il est produit dans l'étape d'impression (103.13), et
- la matrice de décision est utilisée dans l'étape de décision.

11. Procédé selon la revendication 10, **caractérisé en ce que**
- au moins pour une partie du motif de points comprenant le premier point, une matrice de motif de points est générée, un nombre prédéterminé de points d'image à imprimer étant associé à chaque point à imprimer du motif de points,
- dans l'étape de décision (103.11) respective, une matrice d'impression est générée par une liaison par point de la matrice de motif de points avec la matrice de décision et
- dans l'étape d'impression (103.13), l'image est formée en utilisant la matrice d'impression.

12. Procédé selon la revendication 10 ou 11, **caractérisé en ce que** la matrice de décision est régénérée de nouveau à des intervalles prédéterminés, en particulier après chaque n-ième impression.

13. Procédé selon l'une quelconque des revendications précédentes, **caractérisé en ce que** la première probabilité et/ou la seconde probabilité est déterminée en fonction du fait que le premier point est un point limite de l'impression définissant un contour de l'impression.

14. Procédé selon la revendication 13, **caractérisé en ce que** la première probabilité et/ou la deuxième probabilité est mise à au moins 80%, de préférence au moins 90%, plus préférablement 100%, lorsque le premier point est un point limite de l'impression définissant un contour de l'impression.

15. Procédé selon l'une quelconque des revendications précédentes, **caractérisé en ce qu'**au moins l'un des générateurs aléatoires est un algorithme pseudo-aléatoire, ce qui génère notamment des nombres pseudo-aléatoires.

16. Procédé selon l'une quelconque des revendications précédentes, **caractérisé en ce que** l'impression est une impression d'affranchissement.

17. Dispositif pour produire une impression avec un dispositif d'impression (102.2), travaillant selon un principe d'une matrice de points, en particulier un principe à jet d'encre, qui est commandé par un dispositif de commande (102.1), dans lequel
- pour l'impression un motif de points comprenant une première section et une deuxième section différente de la première section, est prédéterminée pour le dispositif de commande (102.1)
- le dispositif d'impression (102.2) est adapté pour générer, sous contrôle du dispositif de commande (102.1), des points d'image correspondants au motif de points prédéterminé sur un substrat, dans lequel
- le dispositif de commande (102.1) est adapté pour
- spécifier une première probabilité pour au moins un premier point d'image avec laquelle le premier point d'image est généré,
- déterminer, dans une première étape de décision (103.11), en utilisant un premier générateur aléatoire et la première probabilité, si le premier point d'image est généré, et
- contrôler le dispositif d'impression (102.2) de telle manière que le premier point d'image est généré en fonction du résultat de la première étape de décision (103.11)
**caractérisé en ce que**
- le dispositif de commande (102.1) est adapté pour spécifier une valeur différente pour la première probabilité en fonction de la position du premier point d'image dans la première section ou la deuxième section.

18. Dispositif selon la revendication 17, caractérisé en ce le dispositif de commande (102.1) est adapté pour
- spécifier une deuxième probabilité pour au moins un deuxième point d'image avec laquelle le deuxième point d'image est généré,
- déterminer, dans une deuxième étape de décision (103.11), en utilisant un deuxième générateur aléatoire et la deuxième probabilité, si le deuxième point d'image est généré, et
- contrôler le dispositif d'impression (102.2) de telle manière que le premier point d'image est généré en fonction du résultat de la première étape de décision (103.11).

19. Dispositif selon la revendication 18, **caractérisé en ce que**
- le motif de points est spécifié pour le dispositif de commande (102.1) avec une première résolution prédéterminée,
- le dispositif d'impression (102.2) a une seconde résolution maximale qui est supérieure à la première résolution, et
- le premier point d'image et le second point d'image est associé à au moins un premier point du motif de points.

20. Dispositif selon la revendication 19, **caractérisé en ce que**
- la seconde résolution est m fois la première résolution, où m est un entier, et
- au moins m points d'image sont associés à au moins le premier point.

21. Dispositif selon l'une quelconque des revendications 18 à 20, **caractérisé en ce que** la seconde probabilité est mise égale à la première probabilité.

22. Dispositif selon l'une quelconque des revendications 18 à 21, **caractérisé en ce que** le premier générateur aléatoire et le second générateur aléatoire sont identiques.

23. Dispositif selon l'une quelconque des revendications 18 à 22, **caractérisé en ce que** le dispositif de commande (102.1) est configuré pour spécifier la deuxième probabilité est en fonction de la position du deuxième point dans la première section ou la deuxième section du motif de points

24. Dispositif selon l'une quelconque des revendications 17 à 23, **caractérisé en ce que**
- le motif de points comprend, comme différente première section et deuxième section, une première section et une deuxième section avec différents types d'image d'impression, et
- le dispositif de commande (102.1) est configuré pour spécifier la première probabilité et/ou la deuxième probabilité en fonction du type d'image d'impression du motif de points à la position du premier point.

25. Dispositif selon l'une des revendications 17 à 24, **caractérisé en ce que** le dispositif de commande (102.1) est adapté pour
- générer, en utilisant le premier générateur aléatoire, dans une première plage de nombres prédéterminée des nombres premiers aléatoires,
- spécifier la première probabilité en divisant la première plage de nombres dans une première partie et au moins une seconde partie,
- générer, en utilisant le premier générateur aléatoire, pour chaque point d'image un premier nombre aléatoire et
- établir dans la première étape de décision (103.11) que
- le point d'image respectif est généré dans l'étape d'impression (103.13), lorsque le premier nombre aléatoire se trouve dans la première partie de la première plage de nombres, et
- le point d'image respectif n'est pas généré dans l'étape d'impression (103.13), lorsque le premier nombre aléatoire se trouve dans la deuxième partie de la première plage de nombres.

26. Dispositif selon l'une des revendications 17 à 25, **caractérisé en ce que** le dispositif de commande (102.1) est adapté pour
- générer une matrice de décision au moins pour une partie du motif de points comprenant le premier point, dans lequel
- la matrice de décision est généré en utilisant la première probabilité et le premier générateur aléatoire, et
- la matrice de décision détermine pour chacun point d'image associé à un point du motif de points s'il est produit dans l'étape d'impression (103.13), et
- utiliser la matrice de décision dans l'étape de décision.

27. Dispositif selon la revendication 26, **caractérisé en ce que** le dispositif de commande (102.1) est adapté pour
- générer au moins pour une partie du motif de points comprenant le premier point une matrice de motif de points, un nombre prédéterminé de points d'image à imprimer étant associé à chaque point à imprimer du motif de points,
- générer, dans l'étape de décision (103.11) respective, une matrice d'impression par une liaison par point de la matrice de motif de points avec la matrice de décision, et
- former, dans l'étape d'impression (103.13), l'image en utilisant la matrice d'impression.

28. Dispositif selon la revendication 26 ou 27, **caractérisé en ce que** le dispositif de commande (102.1) est adapté pour re-générer la matrice de décision de nouveau à des intervalles prédéterminés, en particulier après chaque n-ième impression.

29. Dispositif selon l'une des revendications 17 à 28, **caractérisé en ce que** le dispositif de commande est adapté pour déterminer la première probabilité et/ou la seconde probabilité en fonction du fait que le premier point est un point limite de l'impression définissant un contour de l'impression

30. Dispositif selon la revendication 29, **caractérisé en ce que** le dispositif de commande (102.1) est adapté pour mettre la première probabilité et/ou la deuxième probabilité à au moins 80%, de préférence au moins 90%, plus préférablement 100%, lorsque le premier point est un point limite de l'impression définissant un contour de l'impression.

31. Machine à affranchir comprenant un dispositif (102) selon l'une quelconque des revendications 17 à 30
